# EUROPEAN PATENT APPLICATION

(11) **EP 3 210 700 A1**
(43) Date of publication of application: **30.08.2017**
(21) Application number: 15898478.1
(22) Date of filing: 25.12.2015
(51) Int. Cl.: B22F 3/16, B22F 3/105

(54) **THREE-DIMENSIONAL LAMINATE MOLDING DEVICE, CONTROL METHOD OF THREE-DIMENSIONAL LAMINATE MOLDING DEVICE, AND CONTROL PROGRAM OF THREE-DIMENSIONAL LAMINATE MOLDING DEVICE**

(71) Applicant: Technology Research Association For Future Additive Manufacturing, Chiyoda-ku Tokyo 1000005 (JP)
(72) Inventor: The designation of the inventor has not yet been filed
(74) Representative: TBK
(86) International application number: PCT/JP2015/086431
(87) International publication number: WO 2017/110000

(57) **Abstract**

A three-dimensional laminated and shaped object having a graded composition is accurately shaped. A three-dimensional laminating and shaping apparatus for shaping a three-dimensional laminated and shaped object having a graded composition by laminating a plurality of kinds of materials includes a material supplier that supplies the materials while executing a scan, an irradiator that irradiates the materials with a beam, and a controller that controls the material supplier. The controller controls the material supplier to supply, to a predetermined scanning area of a material scanning area, a necessary amount of a predetermined material for laminating one layer of the three-dimensional laminated and shaped object at a predetermined number of times.

## Description

### TECHNICAL FIELD

The present invention relates to a three-dimensional laminating and shaping apparatus, a control method of the three-dimensional laminating and shaping apparatus, and a control program of the three-dimensional laminating and shaping apparatus.

### BACKGROUND ART

In the above technical field, patent literature 1 discloses a technique of supplying a plurality of kinds of materials while changing the supply amounts of the materials.

### CITATION LIST

### PATENT LITERATURE

Patent literature 1: Japanese Patent Laid-Open No. 2015-85547

### SUMMARY OF THE INVENTION

### TECHNICAL PROBLEM

In the technique described in the above literature, however, it is impossible to accurately shape a three-dimensional laminated and shaped object having a graded composition.

The present invention enables to provide a technique of solving the above-described problem.

### SOLUTION TO PROBLEM

One aspect of the present invention provides a three-dimensional laminating and shaping apparatus for shaping a three-dimensional laminated and shaped object having a graded composition by laminating a plurality of kinds of materials, comprising:
a material supplier that supplies the materials while executing a scan;
an irradiator that irradiates the materials with a beam; and
a controller that controls the material supplier,
wherein the controller controls the material supplier to supply, to a predetermined scanning area of a material scanning area, a necessary amount of a predetermined material for laminating one layer of the three-dimensional laminated and shaped object at a predetermined number of times.

Another aspect of the present invention provides a control method of a three-dimensional laminating and shaping apparatus for shaping a three-dimensional laminated and shaped object having a graded composition by laminating a plurality of kinds of materials, the apparatus including
a material supplier that supplies the materials while executing a scan,
an irradiator that irradiates the materials with a beam, and
a controller that controls the material supplier,
the method comprising:
causing the controller to control the material supplier to supply, to a predetermined scanning area of a scanning area of the material supplier, a necessary amount of a predetermined material for laminating one layer of the three-dimensional laminated and shaped object at a predetermined number of times.

Still other aspect of the present invention provides a control program of a three-dimensional laminating and shaping apparatus for shaping a three-dimensional laminated and shaped object having a graded composition by laminating a plurality of kinds of materials, the apparatus including
a material supplier that supplies the materials while executing a scan,
an irradiator that irradiates the materials with a beam, and
a controller that controls the material supplier,
the program for causing a computer to execute a method, comprising:
causing the controller to control the material supplier to supply, to a predetermined scanning area of a scanning area of the material supplier, a necessary amount of a predetermined material for laminating one layer of the three-dimensional laminated and shaped object at a predetermined number of times.

### ADVANTAGEOUS EFFECTS OF INVENTION

According to the present invention, it is possible to accurately shape a three-dimensional laminated and shaped object having a graded composition.

### BRIEF DESCRIPTION OF DRAWINGS

Fig. 1 is a view for schematically explaining the arrangement of a three-dimensional laminating and shaping apparatus according to the first embodiment of the present invention;
Fig. 2A is a schematic view for explaining an overview of shaping of a three-dimensional laminated and shaped object by the three-dimensional laminating and shaping apparatus according to the first embodiment of the present invention;
Fig. 2B is a schematic view for explaining another overview of shaping of the three-dimensional laminated and shaped object by the three-dimensional laminating and shaping apparatus according to the first embodiment of the present invention;
Fig. 3 is a view for explaining a method of adjusting the mixing ratio of materials by the three-dimensional laminating and shaping apparatus according to the first embodiment of the present invention;
Fig. 4 is a view for explaining an overview of shaping of a three-dimensional laminated and shaped object by a three-dimensional laminating and shaping apparatus according to a technical premise of the three-dimensional laminating and shaping apparatus according to the first embodiment of the present invention;
Fig. 5 is a view for explaining an overview of a three-dimensional laminated and shaped object shaped by a three-dimensional laminating and shaping apparatus according to the second embodiment of the present invention;
Fig. 6A is a view obtained by dividing a process of shaping a three-dimensional laminated and shaped object shaped by the three-dimensional laminating and shaping apparatus according to the second embodiment of the present invention; and
Fig. 6B is a view for explaining an overview of the process of shaping the three-dimensional laminated and shaped object shaped by the three-dimensional laminating and shaping apparatus according to the second embodiment of the present invention.

### DESCRIPTION OF THE EMBODIMENTS

Preferred embodiments of the present invention will now be described in detail with reference to the drawings. It should be noted that the relative arrangement of the components, the numerical expressions and numerical values set forth in these embodiments do not limit the scope of the present invention unless it is specifically stated otherwise.

### [First Embodiment]

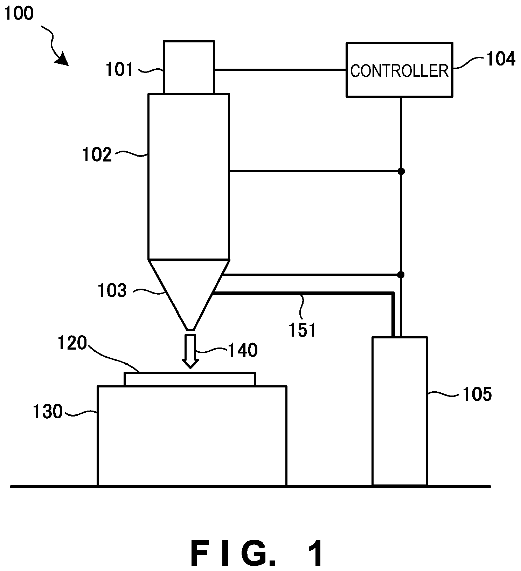

A three-dimensional laminating and shaping apparatus 100 according to the first embodiment of the present invention will be described with reference to Figs. 1 to 3.

### <Technical Premise>

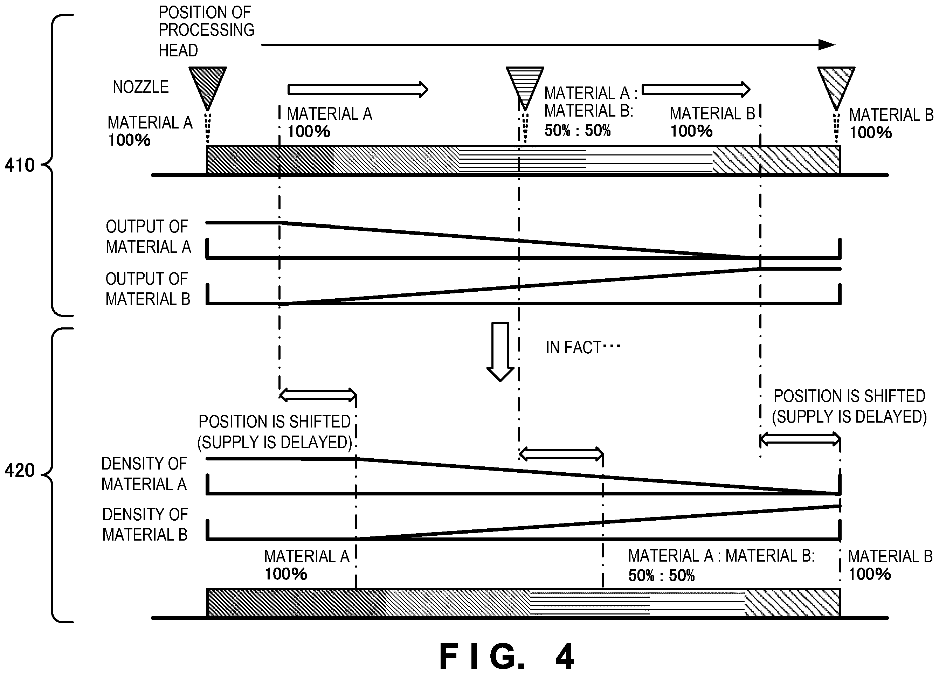

Fig. 4 is a view for explaining an overview of shaping of a three-dimensional laminated and shaped object by a three-dimensional laminating and shaping apparatus according to a technical premise of the three-dimensional laminating and shaping apparatus 100 according to this embodiment. In Fig. 4, 410 shows a state of ideal shaping of a three-dimensional laminated and shaped object having a graded composition. In Fig. 4, 420 shows a state of actual shaping of a three-dimensional laminated and shaped object having a graded composition.

As shown in 410 of Fig. 4, in the three-dimensional laminating and shaping apparatus according to the technical premise, in the ideal case, a processing head, a nozzle, and the like can immediately respond to a control signal from a controller (not shown) to accurately start supply of materials from a desired position. In the ideal case, therefore, it is possible to set the start position of the graded composition as a desired start position.

To the contrary, as shown in 420 of Fig. 4, in actual shaping, if a control signal to start to form a graded composition is transmitted to the nozzle, the nozzle receives the control signal and starts to operate but it takes time to convey the materials to the distal end of the nozzle. This shifts the start position of material supply from the desired start position, thereby shifting the start position of the graded composition. Consequently, although it is possible to shape a three-dimensional laminated and shaped object having a graded composition, it is only possible to shape a three-dimensional laminated and shaped object having a graded composition for which the accuracy of the gradient start position is reduced.

That is, if the processing head (nozzle) is made to execute a scan while supplying (spraying) the materials from the nozzle, the material supply position is shifted by 250 mm by assuming, for example, that the scanning speed of the nozzle is 50 mm/sec and it takes 5 sec to supply the materials to the distal end of the nozzle. That is, it takes time for the materials to reach a processing surface. During this period, the processing head (nozzle) moves, thereby shifting the material supply position.

As described above, the three-dimensional laminating and shaping apparatus according to the technical premise generates a time lag from when the nozzle receives the control signal until material supply actually starts, and thus it is difficult to match the start position (start coordinates) of the material supply and material supply amounts (material mixing ratio). As a result, it is impossible to accurately shape a three-dimensional laminated and shaped object having a graded composition.

### <Technique of Embodiment>

Fig. 1 is a view for schematically explaining the arrangement of the three-dimensional laminating and shaping apparatus 100 according to this embodiment. Note that in Fig. 1, to avoid the view from becoming complicated, members other than those shown in Fig. 1 are not illustrated, as needed.

The three-dimensional laminating and shaping apparatus 100 is an apparatus for shaping a three-dimensional laminated and shaped object 120 on a shaping table 130 by melting and solidifying metal powders or the like as materials of a three-dimensional laminated and shaped object by irradiating the metal powders with a laser beam, and laminating the metal powders.

As shown in Fig. 1, the three-dimensional laminating and shaping apparatus 100 includes a light source 101, a lens barrel 102, a nozzle 103, a controller 104, and a material storage 105. The light source 101 generates a laser beam. The lens barrel 102 adjusts the path of the generated laser beam, thereby guiding the laser beam to the shaping table 130. The nozzle 103 sprays a carrier gas 140 from the distal end of the nozzle 103 to supply the materials of the three-dimensional laminated and shaped object 120 onto the shaping table 130. The carrier gas 140 is an inert gas such as argon gas, nitrogen gas, or helium gas, and is a gas for conveying the metal powders or the like as the materials of the three-dimensional laminated and shaped object 120 onto the shaping table 130. The material storage 105 stores the materials of the three-dimensional laminated and shaped object 120, and supplies the materials to the nozzle 103 via a material delivery tube 151 by force feed or the like.

The controller 104 is connected to the light source 101, lens barrel 102, nozzle 103, and material storage 105. The controller 104 controls the light source 101 to adjust the output and the like of the laser beam or the like. Similarly, the controller 104 controls the lens barrel 102 to adjust the optical axis, focusing state, and the like of the laser beam or the like. Furthermore, the controller 104 controls the nozzle 103 and material storage 105 to adjust the scanning speed of the nozzle 103, the spray amount of the carrier gas 140 from the nozzle 103, and the like, thereby adjusting the supply amounts of the materials.

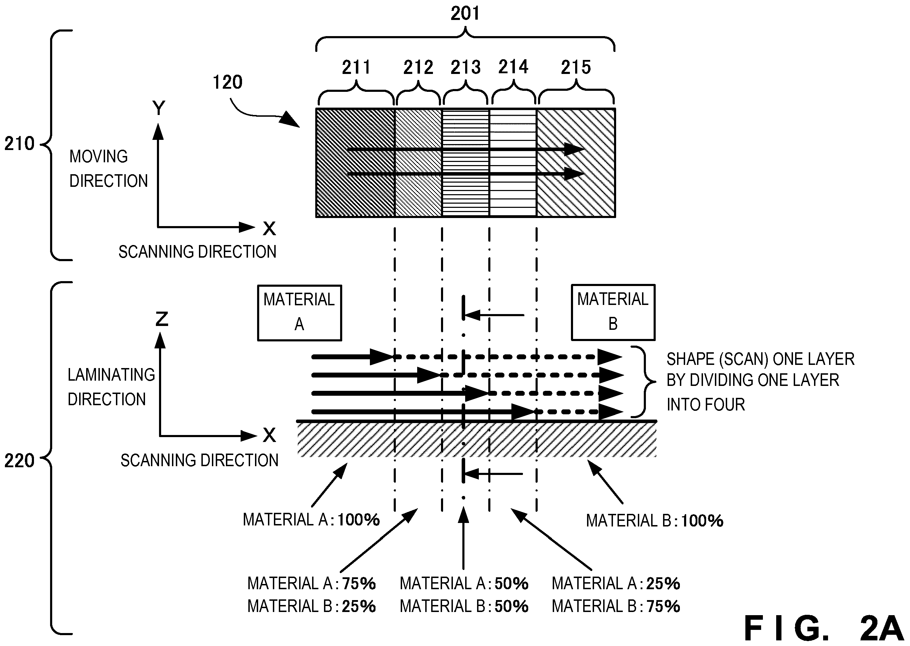

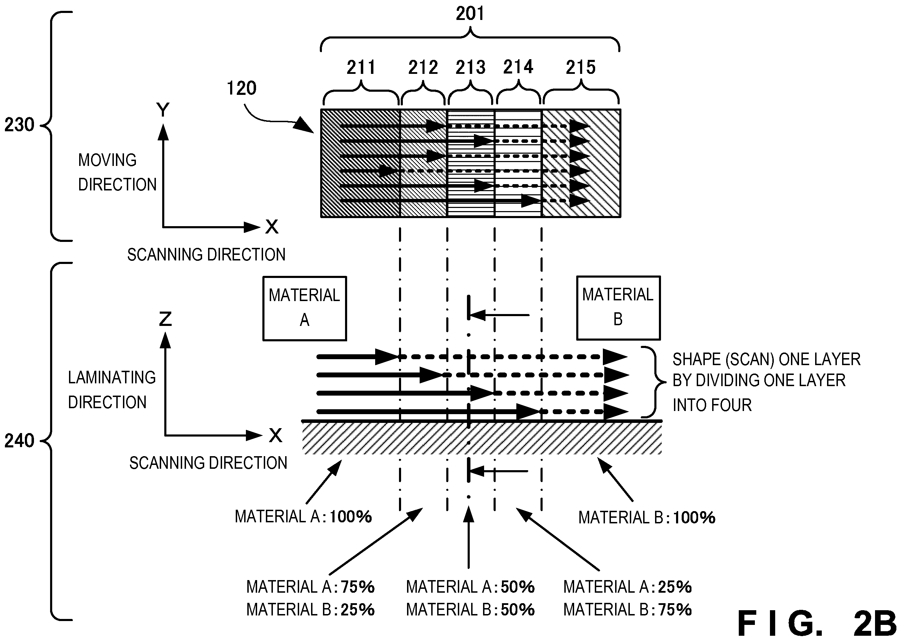

A method of shaping the three-dimensional laminated and shaped object 120 by the three-dimensional laminating and shaping apparatus 100 will be described with reference to Fig. 2. Fig. 2A is a schematic view for explaining an overview of shaping the three-dimensional laminated and shaped object 120 by the three-dimensional laminating and shaping apparatus 100 according to this embodiment. In Fig. 2A, 210 is a schematic plan view showing the three-dimensional laminated and shaped object 120, and 220 is a schematic side view showing the three-dimensional laminated and shaped object 120. Fig. 2B is a schematic view for explaining another overview of shaping of the three-dimensional laminated and shaped object 120 by the three-dimensional laminating and shaping apparatus 100 according to this embodiment. In Fig. 2B, 230 is a schematic plan view showing the three-dimensional laminated and shaped object 120, and 240 is a schematic side view showing the three-dimensional laminated and shaped object 120.

The three-dimensional laminated and shaped object 120 is a shaped object shaped by laminating two kinds of materials. As shown in 210 of Fig. 2A, the three-dimensional laminated and shaped object 120 has a graded composition in which the composition of the materials sequentially changes from left. As shown in 210 of Fig. 2A, a scanning area 201 of the three-dimensional laminated and shaped object 120 is divided into five scanning areas 211, 212, 213, 214, and 215 which are arranged from left in the order named. The scanning area 201 indicates, for example, an area which can be scanned by a material supplier such as the nozzle 103 or a recoater.

In the scanning area 211, material A : material B is 100% : 0%. In the scanning area 212, material A : material B is 75% : 25%. In the scanning area 213, material A : material B is 50% : 50%. In the scanning area 214, material A : material B is 25% : 75%. In the scanning area 215, material A : material B is 0% : 100%. By shaping the object in this way, the three-dimensional laminated and shaped object 120 has a graded composition in which the mixing densities of materials A and B change from left in one layer without changing the supply amounts or supply ratio of the materials during shaping (scan).

Laminating of the three-dimensional laminated and shaped object 120 is performed in the following procedure, as shown in 220 of Fig. 2A. In the first scan (laminating), material A is supplied from the scanning area 211 to the scanning area 214, and material B is supplied to the scanning area 215. In the second scan, material A is supplied from the scanning area 211 to the scanning area 213, and material B is supplied from the scanning area 214 to the scanning area 215. In the third scan, material A is supplied from the scanning area 211 to the scanning area 212, and material B is supplied from the scanning area 213 to the scanning area 215. In the fourth scan, material A is supplied to the scanning area 211, and material B is supplied from the scanning area 212 to the scanning area 215.

By spreading the materials, in the scanning area 211, the density of material A is 100%. In the scanning area 212, the density of material A is 75% and the density of material B is 25%. In the scanning area 213, the density of material A is 50% and the density of material B is 50%. In the scanning area 214, the density of material A is 25% and the density of material B is 75%. In the scanning area 215, the density of material B is 100%.

That is, the shaping method according to this embodiment adjusts the composition by the material supply count (the scan count of the nozzle 103) without changing the supply amounts of the materials (materials contained in the carrier gas 140) during the movement of the nozzle 103. By adopting the shaping method, it is possible to form a graded composition (gradation) in which the mixing densities of materials A and B change such that the density of material A gradually decreases from 100% in the scanning direction and the density of material B finally becomes 100%. In the shaping method according to this embodiment, since the supply amounts of the materials are not changed during the operation of the nozzle 103, the shaping speed decreases but the position accuracy of formation of the graded composition significantly improves.

A case in which the scan necessary for shaping one layer is divided into four to shape one layer has been explained. However, the division number of one layer is not limited to four, and may be an arbitrary number. Note that the output of the laser or the like with which the materials are irradiated is changed in accordance with the scan count necessary for shaping one layer. That is, as the scan count necessary for shaping one layer increases, the amounts of the materials supplied by each scan decrease, and thus the output of the laser is accordingly weakened. To the contrary, as the scan count necessary for shaping one layer decreases, the supply amounts of the materials increase, and thus the output of the laser is strengthened.

As shown in Fig. 2B, the laminating order may be changed with respect to the moving direction (Y direction). That is, a graded composition may be formed in the moving direction. Note that the above description assumes a method of forming a molten pool by irradiation with the laser beam or the like and ejecting the materials to the molten pool, like the LMD (Laser Metal Deposition) method. However, the present invention is applicable to a method of spreading a material on a shaping surface first, and irradiating the spread material with a laser beam or the like, like a powder bed method. An example in which a graded composition is formed in one layer has been described above. For example, however, such laminating method is applicable to the case of a plurality of layers.

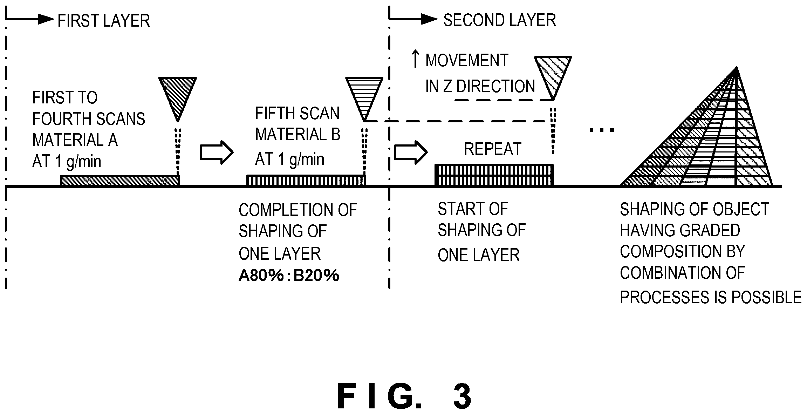

Fig. 3 is a view for explaining a method of adjusting the mixing ratio of the materials by the three-dimensional laminating and shaping apparatus 100 according to this embodiment. For example, to shape a layer in which the mixing ratio of materials A and B is 80% : 20%, material A is supplied at 1 g/min in the first to fourth scans, and material B is supplied at 1 g/min in the fifth scan. By repeating this process to shape the second layer and subsequent layers, a shaped object with the mixing ratio of materials A and B of 80% : 20% can be shaped as the three-dimensional laminated and shaped object 120. It is possible to change the mixing ratio of materials A and B by adjusting the scan counts of the materials, thereby shaping the three-dimensional laminated and shaped object 120 having the graded composition.

According to this embodiment, since the supply amounts or supply densities of the materials are changed by the scan count of the nozzle without changing the supply amounts of the materials during the operation of the nozzle, it is possible to accurately shape the three-dimensional laminated and shaped object having the graded composition.

### [Second Embodiment]

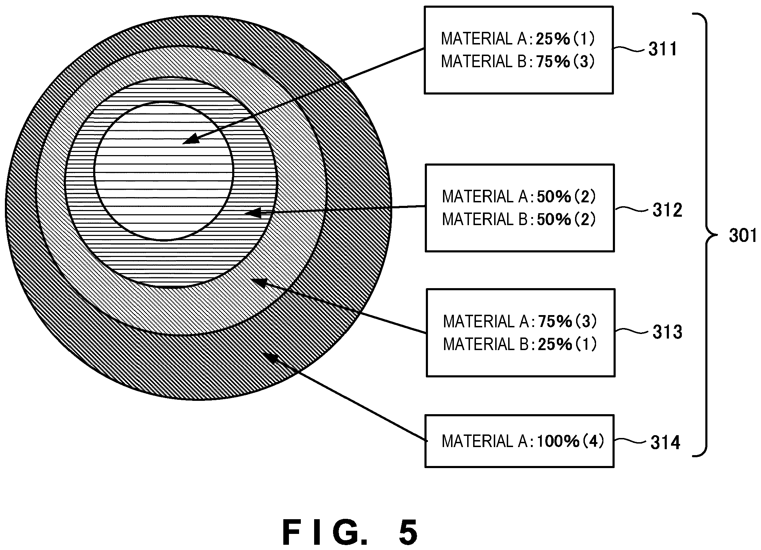

A three-dimensional laminating and shaping apparatus according to the second embodiment of the present invention will be described with reference to Figs. 5 to 6B. Fig. 5 is a plan view for explaining an overview of a three-dimensional laminated and shaped object shaped by the three-dimensional laminating and shaping apparatus according to this embodiment. In this embodiment as well, an example in which one layer is shaped by four scans will be described. Note that each number in parentheses in Fig. 4 represents a scan count.

A three-dimensional laminated and shaped object 301 is a shaped object in which the density of material A increases (the density of material B decreases) from the central portion to the peripheral portion. In a scanning area 311, material A : material B is 25% : 75%. In a scanning area 312, material A : material B is 50% : 50%. In a scanning area 313, material A : material B is 75% : 25%. In a scanning area 314, material A : material B is 100% : 0%.

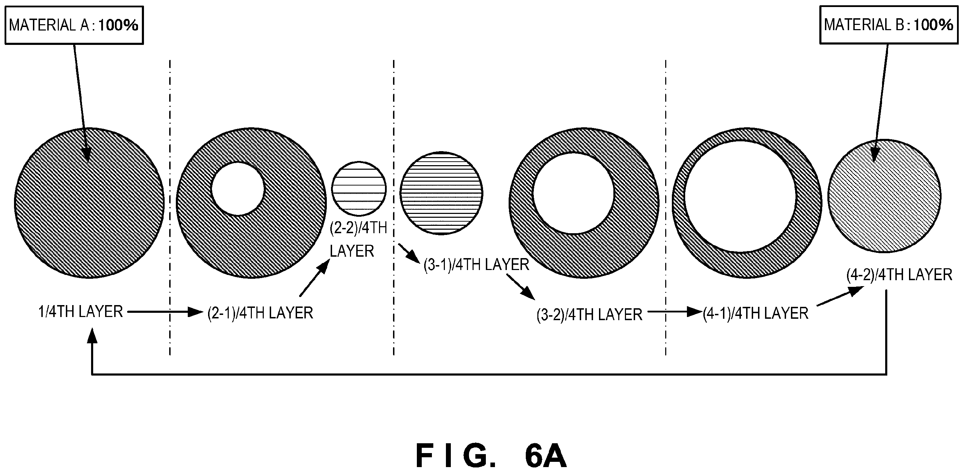

Fig. 6A is a view obtained by dividing a process of shaping a three-dimensional laminated and shaped object shaped by the three-dimensional laminating and shaping apparatus according to this embodiment. As shown in Fig. 6A, the three-dimensional laminating and shaping apparatus shapes each layer by causing a nozzle 103 to scan 1/4th layer → (2-1)/4th layer → (2-2)/4th layer → (3-1)/4th layer → (3-2)/4th layer → (4-1)/4th layer → (4-2)/4th layer in the order named.

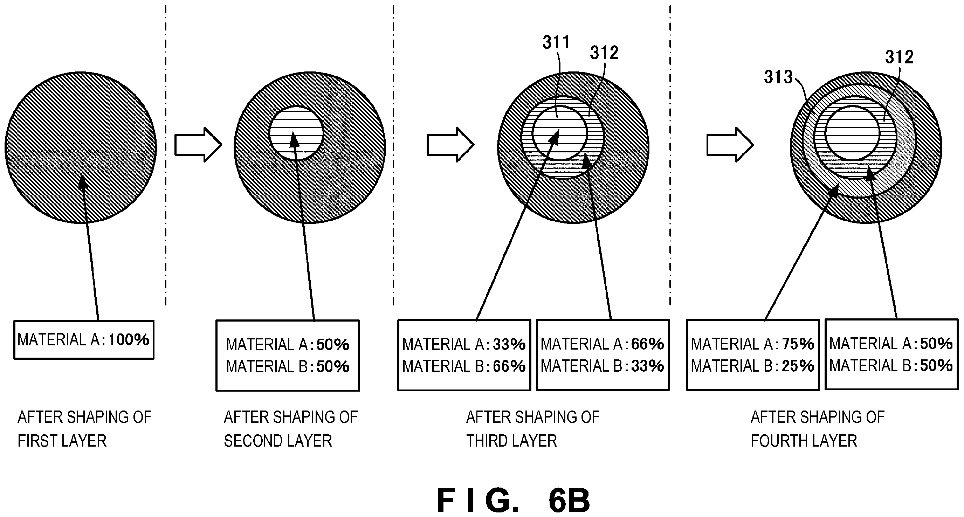

Fig. 6B is a view for explaining an overview of the process of shaping the three-dimensional laminated and shaped object shaped by the three-dimensional laminating and shaping apparatus according to this embodiment, and shows the mixing ratio of materials A and B after shaping each layer obtained by dividing one layer into four. For example, material A : material B is 100% : 0% after shaping the first layer, and is 50% : 50% after shaping the second layer. After shaping the third layer, material A : material B is 33% : 66% in the scanning area 311 overlapping the second layer, and is 66% : 33% in the scanning area 312 scanned in the (3-1)/4th layer. After shaping the fourth layer, material A : material B is 50% : 50% in the scanning area 312, and is 75% : 25% in the scanning area 313 scanned in the (4-2)/4th layer.

According to this embodiment, it is possible to accurately shape three-dimensional laminated and shaped objects having various graded compositions. It is also possible to accurately shape a three-dimensional laminated and shaped object having a graded composition without mixing unevenness of materials.

### [Other Embodiments]

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

The present invention is applicable to a system including a plurality of devices or a single apparatus. The present invention is also applicable even when an information processing program for implementing the functions of the embodiments is supplied to the system or apparatus directly or from a remote site. Hence, the present invention also incorporates the program installed in a computer to implement the functions of the present invention by the computer, a medium storing the program, and a WWW (World Wide Web) server that causes a user to download the program. Especially, the present invention incorporates at least a non-transitory computer readable medium storing a program that causes a computer to execute processing steps included in the above-described embodiments.

## Claims

1. A three-dimensional laminating and shaping apparatus for shaping a three-dimensional laminated and shaped object having a graded composition by laminating a plurality of kinds of materials, comprising:
a material supplier that supplies the materials while executing a scan;
an irradiator that irradiates the materials with a beam; and
a controller that controls said material supplier,
wherein said controller controls said material supplier to supply, to a predetermined scanning area of a material scanning area, a necessary amount of a predetermined material for laminating one layer of the three-dimensional laminated and shaped object at a predetermined number of times.

2. The three-dimensional laminating and shaping apparatus according to claim 1, wherein said irradiator adjusts a beam intensity based on the predetermined number of times.

3. The three-dimensional laminating and shaping apparatus according to claim 1 or 2, wherein the beam is a laser beam.

4. The three-dimensional laminating and shaping apparatus according to any one of claims 1 to 3, wherein the materials are metal powders.

5. A control method of a three-dimensional laminating and shaping apparatus for shaping a three-dimensional laminated and shaped object having a graded composition by laminating a plurality of kinds of materials, the apparatus including
a material supplier that supplies the materials while executing a scan,
an irradiator that irradiates the materials with a beam, and
a controller that controls the material supplier,
the method comprising:
causing the controller to control the material supplier to supply, to a predetermined scanning area of a scanning area of the material supplier, a necessary amount of a predetermined material for laminating one layer of the three-dimensional laminated and shaped object at a predetermined number of times.

6. A control program of a three-dimensional laminating and shaping apparatus for shaping a three-dimensional laminated and shaped object having a graded composition by laminating a plurality of kinds of materials, the apparatus including
a material supplier that supplies the materials while executing a scan, an irradiator that irradiates the materials with a beam, and
a controller that controls the material supplier,
the program for causing a computer to execute a method, comprising:
causing the controller to control the material supplier to supply, to a predetermined scanning area of a scanning area of the material supplier, a necessary amount of a predetermined material for laminating one layer of the three-dimensional laminated and shaped object at a predetermined number of times.
